(19) Europäisches Patentamt
European Patent Office
Office européen des brevets

(11) **EP 3 452 246 B1**

(12) **EUROPÄISCHE PATENTSCHRIFT**

(45) Veröffentlichungstag und Bekanntmachung des Hinweises auf die Patenterteilung:
**09.07.2025 Patentblatt 2025/28**

(21) Anmeldenummer: **17720817.0**

(22) Anmeldetag: **03.05.2017**

(51) Internationale Patentklassifikation (IPC):
**B23K 26/046** *(2014.01)* **B23K 26/06** *(2014.01)*
**G02B 27/09** *(2006.01)*

(52) Gemeinsame Patentklassifikation (CPC):
**B23K 26/046; B23K 26/0648; B23K 26/0665; G02B 19/0014;** G02B 19/0052

(86) Internationale Anmeldenummer:
**PCT/EP2017/060539**

(87) Internationale Veröffentlichungsnummer:
**WO 2017/191191 (09.11.2017 Gazette 2017/45)**

(54) **ABBILDUNGSOPTIK FÜR DIE MATERIALBEARBEITUNG MITTELS LASERSTRAHLUNG UND LASERBEARBEITUNGSKOPF MIT EINER SOLCHEN**

IMAGING OPTIC FOR MATERIAL MACHINING BY MEANS OF LASER RADIATION AND LASER MACHINING HEAD HAVING SAME

OPTIQUE DE REPRODUCTION POUR L'USINAGE DE MATÉRIAUX PAR FAISCEAU LASER ET TÊTE D'USINAGE LASER ÉQUIPÉE DE CELLE-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2016 DE 102016005376**

(43) Veröffentlichungstag der Anmeldung:
**13.03.2019 Patentblatt 2019/11**

(73) Patentinhaber: **Precitec GmbH & Co. KG
76571 Gaggenau (DE)**

(72) Erfinder: **BLÁZQUEZ-SANCHEZ, David
76571 Gaggenau (DE)**

(74) Vertreter: **Ter Meer Steinmeister & Partner Patentanwälte mbB
Nymphenburger Straße 4
80335 München (DE)**

(56) Entgegenhaltungen:
EP-A1- 3 437 783          WO-A1-2016/188803
CN-A- 102 985 214         DE-A1- 102008 048 502
DE-A1- 102011 117 607

**Beschreibung**

Die Erfindung betrifft eine Abbildungsoptik für die Materialbearbeitung mit Laserstrahlung und einem Laserbearbeitungskopf, der mit einer derartigen Strahlformungsoptik ausgerüstet ist.

Bei der Bearbeitung von Werkstücken mittels Laserstrahlung ist es oft erforderlich, die Fokuslage, also die Lage des Laserstrahlbrennpunktes relativ zum Laserbearbeitungskopf und/oder zum Werkstück sowie den Fokusdurchmesser einzustellen. Dies ist beispielsweise erforderlich, wenn beim Laserschneiden die Bearbeitung von dünnen Blechen zu dicken Blechen wechselt. Kann dabei der Fokusdurchmesser nicht über einen hinreichend großen Bereich variiert werden, so muss die Bearbeitungsoptik ausgetauscht werden, was die Produktivität der Laserbearbeitungsanlage reduziert.

Ein optisches System mit dem bei konstanter Objekt- und Bildlage die Bildgröße, also bei der Materialbearbeitung mit Laserstrahlung der Fokusdurchmesser geändert werden kann, ist in der technischen Optik als Zoomsystem bekannt. Zoomsysteme ermöglichen eine Einstellung des Abbildungsmaßstabes, also des Verhältnisses von Fokusdurchmesser zum Durchmesser der Laserstrahlquelle (z.B. die Laseraustrittsfläche einer Lichtleitfaser) beispielsweise durch die Verwendung eines afokalen Teleskops zwischen Kollimations- und Fokussierungsoptik. Derartige afokale Teleskope bestehen in der Regel aus drei oder vier Linsengruppe. Afokale Teleskope sind z.B. in der US 4353617 A und der EP 0 723 834 A beschrieben. Üblicherweise sind zwei Bewegungen erforderlich, um die Einstellung des Fokusdurchmessers ohne Veränderung der Fokuslage zu realisieren. Die eine Bewegung einer Linse oder Linsengruppe des Zoomsystems dient dabei der Variation des Fokusdurchmessers, während eine zweite Bewegung einer anderen Linse oder Linsengruppe des Zoomsystems zur Kompensation der Fokuslagenänderung, also zur Verschiebung des Fokus zurück in seine ursprüngliche Position dient. Für die industrielle Materialbearbeitung mit Laserstrahlung im Multi-Kilowatt-Bereich ist es aber wichtig, die Anzahl der optischen Elemente klein zu halten, da unerwünschte Effekte in der Regel mit der Anzahl der optischen Elemente zunehmen und sich gegenseitig verstärken. Ein Beispiel dafür ist der thermische Fokus-Shift, also die Veränderung der Brechkraft oder Brennweite einer Linse oder eines optischen Systems infolge des temperaturabhängigen Brechungsindexes und/oder der thermischen Ausdehnung des Linsenmaterials.

Aus der DE 198 25 092 C2 ist ein Lasersystem zur Erzeugung eines fokussierten Laserstrahls mit variablem Fokusdurchmesser bekannt, bei dem zwischen einer feststehenden Kollimatorlinse und einer in Richtung der optischen Achse bewegbaren Fokussierlinse ein ebenfalls in Richtung der optischen Achse bewegbares negatives (konkaves) optisches Element (Zerstreuungslinse) vorgesehen ist. Durch Variation des Abstandes zwischen der Zerstreuungslinse und der Fokussierlinse lässt sich der Durchmesser des Laserstrahlfokus variieren. Damit die Fokusebene in der Werkstückebene verbleibt, muss das System aus Zerstreuungslinse und Fokussierlinse entsprechend in Richtung der optischen Achse des Systems verschoben werden.

Nachteilig ist hier, dass ein hoher mechanischer Aufwand im Fokussierbereich betrieben werden muss, da wegen der Nähe zur Bearbeitungsstelle und mit den damit verbundenen thermischen Belastungen und Verschmutzungsgefahren, infolge von Metallspritzern, Schmauch und dergleichen, besondere Anforderungen an Robustheit und Zugänglichkeit gestellt werden.

Aus der DE 20 2010 006 047 U1 ist eine Strahlformungseinheit zur Fokussierung eines Laserstrahls bekannt, die eine Kollimatoroptik aus zwei im Laserbearbeitungskopf entlang der optischen Achse beweglichen, sammelnden optischen Elementen und einer Fokussieroptik aufweist. Die Kollimatoroptik ist dabei nach Art eines Keplerschen Fernrohrs aufgebaut. Dabei dient das erste bewegliche optische Element zur Einstellung des Fokusdurchmessers und das zweite bewegliche optische Element zur Kompensation oder Einstellung der Fokuslage.

Da hier im Kollimationsbereich ein realer Zwischenfokus vorhanden ist, weist das bekannte optische System eine große Gesamtlänge auf.

Aus der DE 10 201 1 1 17 607 A1, die dem Oberbegriff von Anspruch 1 zugrunde liegt, ist eine weitere Optik für Laserstrahlung mit variablem Abbildungsmaßstab bekannt, bei der ein Kollimations-Objektiv und eine Fokus- sieroptik vorgesehen sind. Das Kollimations-Objektiv besteht dabei aus einer ersten beweglichen Sammellinsengruppe, einer zweiten beweglichen Zerstreuungslinsen- gruppe und einer dritten feststehenden oder axial beweglichen Sammellinsengruppe. Durch Verschiebung der ersten beiden Linsengruppen gegeneinander lässt sich wiederum der Fokusdurchmesser einstellen. Ist die dritte Linsengruppe ebenfalls axial verstellbar, so ist es auch möglich, die axiale Fokuslage zu verstellen.

DE 10 2008 048 502 A1 beschreibt eine Erfindung, welche eine optische Vorrichtung zur Fokussierung eines Laserstrahls in einen Arbeitsfokus betrifft, insbesondere zur Fokussierung eines Laserstrahls in einem Laserbearbeitungskopf zur Materialbearbeitung, mit eine Objektivanordnung, die einen Kollimator und einer Fokussiergruppe umfasst, um es zu ermöglichen, die Lage des Arbeitsfokus entlang der optischen Achse zu verschieben, ohne dabei, gleichbleibende Laserleistung vorausgesetzt, die Leistungsdichte im Arbeitsfokus zu ändern, ist erfindungsgemäß vorgesehen, dass die Fokussiergruppe eine erste und eine zweite in axialer Richtung verschiebbar angeordnete Linsengruppe sowie eine Frontlinsengruppe aufweist, die relativ zum Kollimator feststehend angeordnet ist, wobei die beweglich angeordneten Linsengruppen so ausgebildet sind, dass durch ihre Verschiebung die axiale Lage des Arbeitsfokus relativ zur Frontlinsengruppe einstellbar ist, ohne dass sich dabei die Vergrößerung verändert.

Auch hier liegen die beweglichen optischen Elemente im Kollimationsbereich, jedoch werden durch die hier verwendete Anzahl der optischen Elemente die üblichen thermischen Probleme in der Lasermaterialbearbeitung, wie zum Beispiel thermischer Fokus- Shift, besonders kritisch.

Der Erfindung liegt die Aufgabe zugrunde, eine Abbildungsoptik für die Materialbearbeitung mittels Laserstrahlung bereit zu stellen, die in bautechnisch einfacher und kompakter Weise eine flexible Einstellung von Fokuslage und Fokusdurchmesser ermöglicht. Eine weitere Aufgabe der Erfindung ist es, einen Laserbearbeitungskopf mit einer derartigen Abbildungsoptik bereit zu stellen.

Diese Aufgabe wird durch die Abbildungsoptik nach Anspruch 1 und den Laserbearbeitungskopf nach Anspruch 2 gelöst. Vorteilhafte Ausgestaltungen der Erfindung sind in den Unteransprüchen beschrieben.

Die Erfindung betrifft eine Abbildungsoptik für Laserstrahlung mit einstellbarer Fokuslage sowie einstellbarem Fokusdurchmesser. Ein Zoomsystem umfasst dabei eine Kollimatoroptik aus einer ersten beweglichen Linse oder Linsengruppe mit positiver Brennweite und einer zweite beweglichen Linse oder Linsengruppe mit negativer Brennweite sowie ein Fokussierungselement. Die erste bewegliche Linse oder Linsengruppe mit positiver Brennweite dient zur Abbildung einer Arbeitslaserstrahlquelle in einen virtuellen Zwischenfokus und die zweite bewegliche Linse oder Linsengruppe (212) mit negativer Brennweite dient zur Abbildung des virtuellen Zwischenfokus nach unendlich, sodass die Fokussieroptik die Arbeitslaserstrahlquelle in ihren Brennpunkt abbildet.

Ferner ist ein Laserbearbeitungskopf mit einem Gehäuse, durch das ein Arbeitslaserstrahl hindurch führbar ist, zur Erzeugung eines Arbeitsfokus mit einer erfindungsgemäßen Abbildungsoptik ausgerüstet.

Erfindungsgemäß lässt sich somit gleichzeitig ein maximaler Einstellbereich der Fokuslage bei reduzierter Anzahl der optische Elemente oder Linsengruppen und minimaler Baulänge erzielen.

Bei einer vorteilhaften Weiterbildung des erfindungsgemäßen Laserbearbeitungskopfs ist vorgesehen, dass die erste bewegliche Linse oder Linsengruppe und die zweite bewegliche Linse oder Linsengruppe zur Einstellung von Fokusdurchmesser und/oder Fokuslage jeweils von einem Stellantrieb verschiebbar sind.

Grundsätzlich ist es denkbar, dass die beiden Stellantriebe über Getriebe mit einander gekoppelt sind, sodass die Verschiebungen der Linsen oder Linsengruppen synchron und/oder proportional zueinander erfolgen. Eine zweckmäßige Ausgestaltung der Erfindung zeichnet sich jedoch dadurch aus, dass die Stellantriebe unabhängig von einander sind. Dies hat nicht nur den Vorteil, dass ein mechanisch einfacher Aufbau möglich ist, sondern auch, dass bei einem Wechsel der Arbeitslaserstrahlung die Wellenlängenabhängigkeit der Brennweiten der optischen Elemente bei der Einstellung von Fokusdurchmesser und/oder Fokuslage auf einfache Weise berücksichtigt werden kann.

Die Einstellung der Lage der beweglichen Linsen oder Linsengruppen zueinander und zur Fokussieroptik erfolgt in Abhängigkeit von Bearbeitungsart und Laserwellenlänge durch eine Steuerungseinheit, die vorzugsweise programmierbar ist.

Die Erfindung wird im Folgenden beispielsweise anhand der Zeichnung näher erläutert. Es zeigen:

Figur 1 eine vereinfachte, schematische Darstellung eines erfindungsgemäßen Laserbearbeitungskopfes, und

Figuren 2 (a) bis (c) vereinfachte, schematische Darstellungen der erfindungsgemäßen Abbildungsoptik, wobei die Linsengruppen zueinander verschiedene Stellungen einnehmen.

In den Figuren der Zeichnung sind gleiche Bauelemente mit gleichen Bezugszeichen versehen.

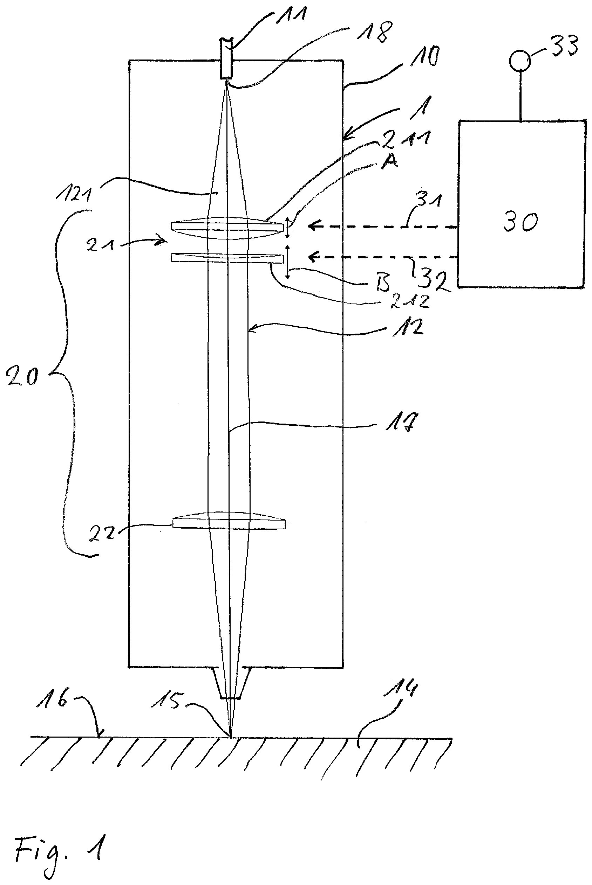

Figur 1 zeigt einen Laserbearbeitungskopf 10 durch den ein über eine Lichtleitfaser 11 zugeführter Arbeitslaserstrahl 12 hindurch geführt und auf ein Werkstück 14 gelenkt wird. Der aus der Lichtleitfaser 11 austretende divergente Arbeitslaserstrahl 121 wird von einer Abbildungsoptik 20 in einen Arbeitsfokus 15 auf, über, oder unter einer Oberfläche 16 des Werkstücks 14 fokussiert.

Die Abbildungsoptik 20 umfasst eine Kollimatoroptik 21 und eine Fokussieroptik 22. Die Kollimatoroptik 21 umfasst eine erste bewegliche Linse oder Linsengruppe 211 mit positiver Brennweite und eine zweite bewegliche Linse oder Linsengruppe 212 mit negativer Brennweite. Die ersten und zweiten beweglichen Linsen oder Linsengruppen 211, 212 können zur Einstellung von Fokusdurchmesser und/oder Fokuslage jeweils in Axialrichtung durch jeweilige Stellantriebe A, B entlang der optischen Achse 17 verfahren werden, wie durch die Pfeile angedeutet.

Die Stellantriebe A, B, die unabhängig von einander sind, werden von einer Steuerungseinheit 30 gesteuert, wie durch die gestrichelten Linien 31, 32 angedeutet ist, so dass die Einstellung der Lage der beweglichen Linsen oder Linsengruppen 211, 212 zueinander und zur Fokussieroptik 22 in Abhängigkeit von Laserwellenlänge und Bearbeitungsart erfolgen kann.

Die Steuerungseinheit 30, die vorteilhafter Weise über eine geeignete drahtlose oder drahtgebundene Schnittstelle 33 programmierbar ist, kann in nicht näher dargestellter Weise in eine Maschinensteuerung einer Laserbearbeitungsvorrichtung, mit der der erfindungsgemäße Laserbearbeitungskopf 1 verwendet wird, eingebunden sein. Somit können der Steuerungseinheit 30 alle für die Verstellung der Linsen oder Linsengruppen 211, 212 erforderlichen Informationen über Laserwellenlänge, Bearbeitungsart, wie Laserschneiden oder -schweißen, Materialart, wie Metall oder Kunststoff, Blechdicke und dergleichen auf einfache Weise zur Verfügung gestellt werden.

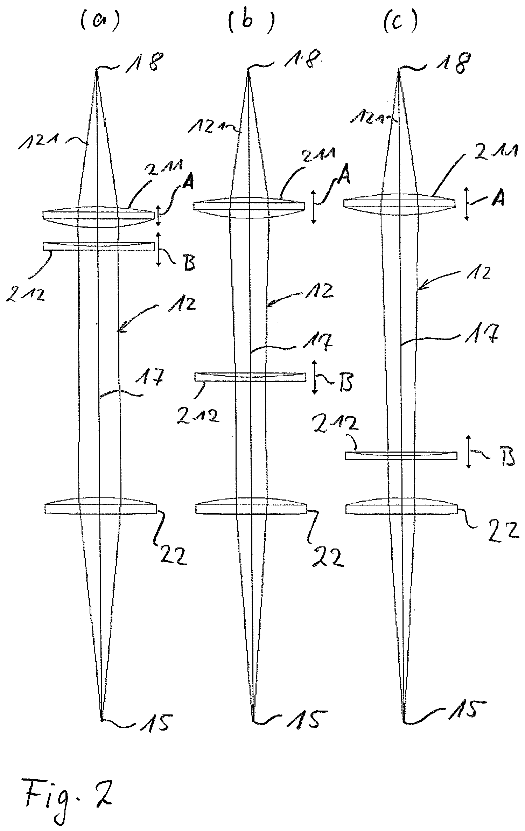

In den Figuren 2 (a) bis (c) sind die Stellungen der beweglichen Linsengruppen 211, 212 relativ zueinander, zur Fokussieroptik 22 und zu einer Arbeitslaserstrahlquelle 18, die von der Austrittfläche der Lichtleitfaser 11 gebildet wird, dargestellt, wie sie zum Schneiden von Dünnblech mit einer Dicke von etwa 5 mm oder weniger, mittlerem Blech mit einer Dicke von etwa 5 mm bis etwa 10 mm bzw. dickem Blech mit einer Dicke von mehr als etwa 10 mm geeignet sind.

Figur 2 (a) zeigt beispielsweise die Stellung der ersten und zweiten beweglichen Linsen oder Linsengruppen 211, 212 der Kollimatoroptik 21 für das Schneiden von Dünnblech, bei dem der Arbeitslaserstrahl 12 im Bereich des Fokus 15 einen relativ kleinen Durchmesser bei einer verhältnismäßig kurzen Rayleighlänge aufweisen kann. Für Dünnblech sind kleine Fokusdurchmesser von etwa 100 μm bis 150 μm üblich.

Werden die Abbildungseigenschaften eines Linsensystems gemäß der folgenden Gleichung

$$m = NA/NA'$$

berücksichtigt, wobei m die Vergrößerung, NA die numerische Apertur des Systems auf der Objektseite und NA' die numerische Apertur des Systems auf der Bildseite darstellt, so ergibt sich bei dem Ausführungsbeispiel in Fig. 2a, bei dem die numerische Apertur der Bildseite NA' etwa gleich der numerischen Apertur der Objektseite NA ist, eine Vergrößerung von $m \cong 1$. Bei einem Faserdurchmesser von etwa 100 μm erhält man somit den optimalen Fokusdurchmesser für das Schneiden von Dünnblech.

Soll der Strahldurchmesser verringert werden, so wird die erste bewegliche Linsengruppe 211 mit positiver Brennweite näher an die Arbeitslaserstrahlquelle 18 bewegt, wodurch sich das von der ersten beweglichen Linsengruppe erzeugte Bild der Arbeitslaserstrahlquelle 18 von der ersten beweglichen Linsengruppe 211 weg bewegt. Demzufolge muss zur Fokuslagenkompensation die zweite bewegliche Linsengruppe 212 mit negativer Brennweite soweit verschoben werden, dass sich das Bild der Arbeitslaserstrahlquelle 18 im Brennpunkt der zweiten beweglichen Linsengruppe 212 mit negativer Brennweite befindet, so dass es von dieser zweiten beweglichen Linsengruppe 212 nach unendlich abgebildet wird. Demzufolge liegt der Laserfokus 15 wieder im Brennpunkt der Fokussieroptik 22.

Um eine besonders lange Rayleighlänge bei großem Fokusdurchmesser zu erhalten, wie sie beim Schneiden von dicken Blechen gewünscht ist, wird die erste bewegliche Linsenbaugruppe 211, wie in Figur 2 (c) dargestellt ist, noch dichter an die Arbeitslaserstrahlquelle geführt, während die zweite bewegliche Linsenbaugruppe 212 noch näher an die Fokussieroptik 22 heran gerückt werden muss. Insbesondere zeigt Figur 2 (c), dass die numerische Apertur der Bildseite NA' kleiner als die numerische Apertur der Objektseite NA ist, so dass eine Vergrößerung m > 1 ergibt.

Der große Vorteil der erfindungsgemäßen Abbildungsoptik 20 besteht darin, dass neben der einfachen und flexiblen Einstellung von Fokuslage und Fokusdurchmesser auch ein erweiterter Nachstellbereich für die Fokuslage ermöglicht wird. Insbesondere kann der Einstellbereich für die Fokuslagen ohne Verstellung der Fokussieroptik 22 maximiert werden, da der Fokusdurchmesser und die Fokuslage mittels der beweglichen Linsengruppen 211, 212 im Kollimationsbereich eingestellt werden und nicht mit optischen Elementen des Fokussierungsbereichs. Hier wird insbesondere ausgenutzt, dass Änderungen der Fokuslage linear mit der Lagenänderung der Fokussieroptik 22 sind, während Änderungen der Fokuslage im Verhältnis zur Änderung eines optischen Bauelements im Kollimationsbereich quadratisch eingehen. Daraus ergibt sich, dass bereits kleine Verschiebungen der beweglichen Linsengruppen 211, 212 im Kollimationsbereich große Verschiebungen der Fokuslage zur Folge haben.

Ein weiterer Vorteil der erfindungsgemäßen Abbildungsoptik besteht darin, dass der Einsatz einer Kollimatoroptik 21, die erfindungsgemäß entsprechend einem Galilei'schen Fernrohr aufgebaut ist, eine kurze Baulänge der Abbildungsoptik 20 ohne realen Zwischenfokus ermöglicht.

All dies wird mit insgesamt nur drei Linsengruppen erreicht, davon zwei Linsengruppen in der Kollimation und eine in der Fokussierung, wobei erfindungsgemäß nur die ersten zwei beweglich sind. Hierdurch gestaltet sich das optische Zoomsystem der erfindungsgemäßen Abbildungsoptik bautechnisch sehr einfach und zugleich unanfällig für thermischen Fokus-Shift.

**Patentansprüche**

1. Abbildungsoptik (20) für die Materialbearbeitung mit Laserstrahlung, bestehend aus

einer Kollimatoroptik (21) zur Kollimation eines divergenten Arbeitslaserstrahls (121) und einer Fokussieroptik (22) zur Fokussierung eines Arbeitslaserstrahls (12) auf ein zu bearbeitendes Werkstück (14),
**dadurch gekennzeichnet, dass**
die Kollimatoroptik (21) aus einer ersten beweglichen Linse oder Linsengruppe (211) mit positiver Brennweite zur Abbildung einer Arbeitslaserstrahlquelle (18) in einen virtuellen Zwischenfokus und einer zweiten beweglichen Linse oder Linsengruppe (212) mit negativer Brennweite zur Abbildung des virtuellen Zwischenfokus nach unendlich besteht, und
wobei nur die erste Linse oder Linsengruppe (211) und die zweite Linse oder Linsengruppe (212) beweglich sind.

**2.** Laserbearbeitungskopf (1) mit einem Gehäuse (10), durch das ein Arbeitslaserstrahl (12) hindurch führbar ist, und mit einer Abbildungsoptik (20) nach Anspruch 1 zur Erzeugung eines Arbeitsfokus (15).

**3.** Laserbearbeitungskopf (1) nach Anspruch 2, **dadurch gekennzeichnet, dass** die erste bewegliche Linse oder Linsengruppe (211) und die zweite bewegliche Linse oder Linsengruppe (212) zur Einstellung von Fokusdurchmesser und/oder Fokuslage jeweils von einem Stellantrieb (A, B) verschiebbar sind.

**4.** Laserbearbeitungskopf (1) nach Anspruch 3, **dadurch gekennzeichnet, dass** die Stellantriebe (A, B) unabhängig voneinander sind.

**5.** Laserbearbeitungskopf (1) nach Anspruch 3, oder 4, **dadurch gekennzeichnet, dass** die Einstellung der Lage der beweglichen Linsen oder Linsengruppen (211, 212) zueinander und zur Fokussieroptik (22) in Abhängigkeit von der Bearbeitungsart und der Laserwellenlänge durch eine Steuerungseinheit (30) erfolgt.

**6.** Laserbearbeitungskopf (1) nach Anspruch 5, **dadurch gekennzeichnet, dass** die Steuerungseinheit (30) programmierbar ist.

**Claims**

**1.** Imaging optics (20) for material machining by means of laser radiation, consisting of:

a collimator optics (21) for collimating a divergent working laser beam (121) and
a focusing optics (22) for focusing a working laser beam (12) on a workpiece (14) to be machined,
**characterised in that**
the collimating optics (21) comprises a first movable lens or lens group (211) with positive focal length for imaging a working laser beam source (18) in a virtual intermediate focal point and a second movable lens or lens group (212) with negative focal length for imaging the virtual intermediate focal point to infinity, and
wherein only the first lens or lens group (211) and the second lens or lens group (212) are movable.

**2.** The laser machining head (1) with a housing (10) through which a working laser beam (12) can be passed, and with imaging optics (20) according to claim 1 for producing a working focus (15).

**3.** The laser machining head (1) according to claim 2, **characterised in that** the first movable lens or lens group (211) and the second movable lens or lens group (212) are displaceable by respective actuating drives (A, B) in order to adjust at least one of a focal diameter and a focal position.

**4.** The laser machining head (1) according to claim 3, **characterised in that** the actuating drives (A, B) operate independently of one another.

**5.** The laser machining head (1) according to claim 3 or 4, **characterised in that** the position of the movable lenses or lens groups (211, 212) relative to one another and relative to the focusing optics (22) is adjusted in dependence on the type of machining and the laser wavelength by means of a control unit (30).

**6.** The laser machining head (1) according to claim 5, **characterised in that** the control unit (30) is programmable.

**Revendications**

**1.** Optique d'imagerie (20) pour l'usinage de matière au moyen d'un rayonnement laser, constituée :

d'une optique de collimation (21) pour collimater un faisceau laser de travail divergent (121) et d'une optique de focalisation (22) pour focaliser un faisceau laser de travail (12) sur une pièce (14) à usiner,
**caractérisée en ce que**
l'optique de collimation (21) est constituée d'une première lentille mobile ou d'un premier groupe de lentilles mobile (211) ayant une distance focale positive pour reproduire en image une source de faisceau laser de travail (18) dans un point focal intermédiaire virtuel, et d'une seconde lentille mobile ou d'un second groupe de lentilles mobile (212) ayant une distance focale négative pour reproduire en image le point focal intermédiaire virtuel à l'infini, et dans laquelle seule la première lentille ou seul le premier groupe de lentilles (211) et seule la seconde lentille ou seul le second groupe de lentilles (212) sont mobiles.

**2.** Tête d'usinage au laser (1) ayant un boîtier (10) à travers lequel un rayon laser de travail (12) peut être guidé et ayant une optique d'imagerie (20) selon la revendication 1 pour générer un point focal de travail (15).

**3.** Tête d'usinage au laser (1) selon la revendication 2, **caractérisée en ce que** la première lentille mobile ou le premier groupe de lentilles mobile (211) et la seconde lentille mobile ou le second groupe de lentilles mobile (212) peuvent être respectivement déplacés par un actionneur (A, B) afin de régler un diamètre focal et/ou une position focale.

4. Tête d'usinage au laser (1) selon la revendication 3, **caractérisée en ce que** les actionneurs (A, B) sont indépendants l'un de l'autre.

5. Tête d'usinage au laser (1) selon la revendication 3 ou 4, **caractérisée en ce que** la position des lentilles mobiles ou des groupes de lentilles mobiles (211, 212) les uns par rapport aux autres et par rapport à l'optique de focalisation (22) est réglée par une unité de commande (30) en fonction du type d'usinage et de la longueur d'onde du laser.

6. Tête d'usinage laser (1) selon la revendication 5, **caractérisée en ce que** l'unité de commande (30) est programmable.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4353617 A
- EP 0723834 A
- DE 19825092 C2
- DE 202010006047 U1
- DE 102011117607 A1
- DE 102008048502 A1